# EUROPEAN PATENT APPLICATION

(11) **EP 0 567 190 A1**
(43) Date of publication of application: **27.10.1993**
(21) Application number: 93201117.4
(22) Date of filing: 17.04.1993
(51) Int. Cl.: C08F 212/14

(54) **Novel terpolymers**

(30) Priority: 23.04.1992 IL 101684
(71) Applicant: Bromine Compounds Ltd., Beer-Sheva 84101 (IL)
(72) Inventor: Kornberg, Nurit, Lehavim (IL); Daren, Stephen, Ness Ziona 70400 (IL); Peled, Michael, Beer-Sheva (IL)
(74) Representative: Perani, Aurelio

(57) **Abstract**

A terpolymer of the formula: 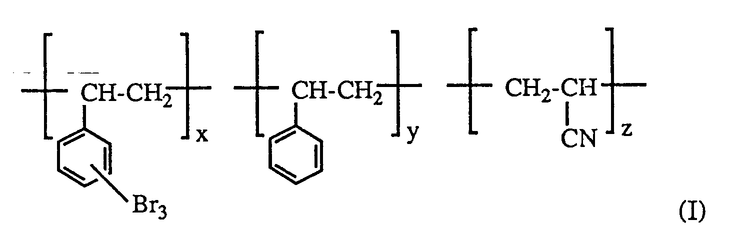
wherein:
x = 0.01 - 0.90
y = 0.05 - 0.50
z = 0.02 - 0.95;
which is useful as a flame-retardant agent, is described. A process for the preparation of the novel terpolymer is also claimed.

## Description

### Field of The Invention

The present invention relates to novel terpolymers based on tribromostyrene (TBS), styrene (S) and acrylonitrile (AN), and their use in synthetic resins as polymeric flame retardants.

### BACKGROUND OF THE INVENTION

The use of flame-retardant additives to render flammable plastic materials flame-retardant is well known in the art. Normally, the incorporation of flame-retardant additives is limited by their physical properties, such as their thermal stability, their compatibility with the base polymer and the modified properties of the resins obtained by such incorporation. Acrylonitrile-butadiene-styrene (ABS) is a particularly important synthetic material used in a variety of domestic and engineering applications. ABS is normally rendered flame-retardant by using conventional flame retardant (FR) additives, such as Octabromo- and Decabromo-diphenyl ethers, Tetrabromobisphenol A, FM-680 (bis tribromophenoxyethane - Great Lakes Chemical Corp.) etc.

In order to be commercially useful the flame retardant (FR) additives should contain as high a bromine content as is possible while maintaining good compatibility with the base polymer. Typically FR additives contain 50-80% bromine by weight.

The present invention is concerned with novel polymeric materials. These materials have a variety of uses as plastic materials per se and especially as flame-retardant alloys or blends. The polymers of the invention, when used as flame-retardant materials, are particularly suitable as flame retardants for styrenic resins such as ABS. While reference to ABS will be made throughout this specification as the representative synthetic resin into which the terpolymers of the invention may be incorporated, the invention is by no means limited to the use thereof in ABS, and the terpolymers of the invention can be conveniently employed in a variety of applications, as will be apparent to persons skilled in the art, e.g., styrenics such as styrene-acrylonitrile and high impact polystyrene and any other compatible polymer.

### The Prior Art

Two basic methods are known in the art for producing flame retardant ABS with polymeric FR's. The first, entails graft polymerization of halostyrenes, styrene, and acrylonitrile onto a polybutadiene latex; the second, polyblending ABS with copolymers and terpolymers containing halostyrenes. Both of these methods are exemplified in Canadian Patent 1,149,984. The present invention deals with the polyblending method which is applicable to a wide range of styrenic and other polymers. In the above Canadian patent, the bromine content of the bromostyrene, styrene, and acrylonitrile terpolymer is typically 27-28% by weight which, as previously stated, is very low for a flame retardant. Only in the case of a (mono)bromostyrene-acrylonitrile copolymer is the bromine content 35-48% (polymer 12) which is still low. The use of monobromostyrene (43.7% bromine) does not allow for the preparation of high bromine content copolymers and terpolymers. Flame-retardants to produce V-0 compounds (according to UL-94) should typically contain 50-80% bromine by weight.

In European Patent 189,668, dibromostyrene (61% bromine) was used to prepare a terpolymer with styrene and maleic anhydride containing 12% bromine. This terpolymer was blended with polycarbonate to produce with the aid of synergists a molded composition which when tested for flame retardance according to UL 94 gave a V-1 rating.

Bromostyrenes, styrene and acrylonitrile as a mixture for grafting onto rubber is exemplified in Japanese Patent 53010689. Terpolymers of parabromostyrene, (meth)acrylonitrile and acrylates are prepared in a solution in Japanese patent JP662246911. However polymers are not easily isolated from polymer solutions and suspension techniques are to be preferred. Many solvents normally employed in this art are considered harmful and should also be avoided for ecological reasons.

Many other different styrenic compositions are also known in the art, which comprise styrene and two or more other monomers, some of which include terpolymers of styrene, acrylonitrile and additional monomers. However, no such terpolymers have been prepared which have incorporated tribromostyrene. The use of tribromostyrene containing 70% by weight bromine, makes possible the production of copolymers and cotelomers with a wide range of bromine contents, including those with more than 50% bromine by weight which were not previously attainable.

### SUMMARY OF THE INVENTION

The flame retardant polymer of this invention comprises a terpolymer of the formula: 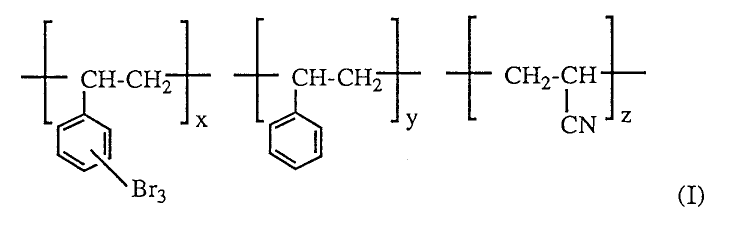
wherein:
x = 0.01 - 0.90 TBS (tribromostyrene moiety)
y = 0.05 - 0.50 S (styrene moiety)
z = 0.02 - 0.95 AN (acrylonitrile moiety)
The term "acrylonitrile" and the symbol "AN" are meant to indicate both acrylonitrile and methacrylonitrile, as appropriate. The contents of x, y and z are calculated on a molar basis.

The terpolymer of formula I can be prepared by any of the accepted methods, e.g. by radical polymerization i.e. in emulsion, suspension, solution or solvent-non solvent. In the latter case, the monomers are dissolved in a solvent from which the newly formed polymer precipitates. The polymerization reaction is initiated by a suitable free radical initiator in a temperature range between 30°C and 120°C, preferably about 70°C.

According to a preferred process of preparation, tribromostyrene is reacted with a mixture of styrene and acrylonitrile in the desired proportions, in a solution of a lower alcohol, and the polymer which forms precipitates out from the mixture and is recovered there from. A preferred alcohol is methanol, and it is preferred to carry out the reaction at the reflux temperature of the reaction mixture circa. 70°C. It should be noted that this is another advantage of the present invention, because methanol is an ecologically acceptable solvent, besides its chemical and processual advantages, which will be apparent to the skilled engineer.

When the polymer of formula I is used as a flame retardant agent, it can be used alone or together with other flame retardant agents, or synergistic additives, e.g., antimony trioxide, or an organic halogenated flame retardant material, or other conventional additives, such as antioxidants, thermal stabilizers, pigments, lubricants, etc. Accordingly, the invention is also directed to a flame retardant additive for rendering flammable resins flame-retarded, which comprises a flame-retardant effective amount of the polymer of formula I.

A particularly useful composition is the "triple point composition" in which the composition of the terpolymer is identical to the composition of the monomers in the feed at all degrees of conversion. The triple point for the monomers of this invention was determined according to the procedures described in "Polymer Chemistry," Bruno Vollmert p. 133. The said triple point was found to be approximately at TBS = 16.7 wt % (3.6 mole %), AN = 55.5 wt % (76.8 mole %) and S = 27.8 wt % (19.6 mol %) (see Example 4).

The invention also encompasses resins made flame-retardant by the addition of a polymer of formula I, particularly styrenic resins.

### Brief Description of the Drawings

Fig. 1 shows the Izod impact as a function of the molar concentration of acrylonitrile in the terpolymer, for Novalar ABS; and
Fig. 2 shows the Izod impact as a function of the molar concentration of acrylonitrile in the terpolymer, for Novadur ABS.

### Detailed Description of Preferred Embodiments

All the above and other characteristics and advantages of the invention will be further understood through the following illustrative and non-limitative description of preferred embodiments thereof.

### Example 1

### Solvent-Non solvent polymerization

Into a 500 ml three-necked flask fitted with a mechanical stirrer and a reflux condenser were added 150 ml absolute methanol. Using an electrically heated oil bath the methanol was heated to reflux for 20 minutes to expel the air from the flask. After this time a solution of tribromostyrene (8.3 g) and benzoyl peroxide (0.5 g) in acrylonitrile (12.5 g) and styrene (12.5 g) was introduced into the reaction flask via a dropping funnel. A white polymer started to precipitate within a few minutes. After about 3 hours a further quantity of tribromostyrene (16.7 g) was added to the hot reaction mixture. Heating was maintained for a total of 15 hours.

After cooling, the polymer-methanol mixture was filtered. After washing the polymer with methanol and drying in a vacuum oven, 40 g of white polymer were obtained. Elemental analysis gave:

| | |
|---|---|
| % Bromine = 41.6 | i.e. TBS = 59.1% by weight |
| % Nitrogen = 3.2 | i.e. AN = 12.1% " |
| | Styrene = 28.8% " |

The polymer so obtained is identified hereinafter as No.: 7691.

Thermal Gravimetric Analysis gave 5% weight loss at 370°C (10°C/min. in air), showing that the terpolymer has good thermal stability.

The existence of a terpolymer, rather than a mixture of homopolymers, was verified by the following tests. Since it is well known that styrene and acrylonitrile copolymerize, it was necessary to show that no TBS homopolymer is formed.
A. A single Glass Transition Temperature was observable by Differential Scanning Calorimeter = 122.5°C (10°C/min in nitrogen).
B. Solubility: 5% solutions of the polymer obtained in Example 1 in both tetrahydrofuran (THF) and dimethylformamide (DMF) were essentially clear.
   When a few drops of these solutions were added to a clear 5% solution of poly (TBS) (Tg = 193°C) in THF, cloudiness appeared, showing the incompatibility of poly (TBS) with the terpolymer of Example 1.
   Therefore, since the original solutions were clear, no poly (TBS) was present in the terpolymer obtained in Example 1.
C. The same clear 5% terpolymer solution in THF was allowed to evaporate slowly in a covered glass petri dish. The resulting film was both transparent and homogeneous.
D. The film obtained in (C) above was examined by X-ray emission in a scanning electron microscope for bromine concentration. The bromine concentration was homogeneous throughout, within the accuracy of the electron microscope and no phase boundaries were observed.

### Example 2

### Preparation of ABS Compounds

The terpolymer obtained in Example 1 was compounded in a Brabender Plasticord with a high rubber content ABS Novalar (Nova) and hot-pressed into 3/8" plates. Four different compounds were prepared as detailed in Table I below, in which the original ABS (Compound 1), ABS and poly (styrene-acrylonitrile) (Compound 2), ABS and terpolymer (Compound 3) and ABS and octabromodiphenyl ether (Bromine Compounds Ltd.) were compared.

**Table I**

| **Compounds with ABS-Nova Novalar Wt Percent of Components** | | | | |
|---|---|---|---|---|
| Compound | 1 | 2 | 3 | 4 |
| ABS (Nova.) | 92.5 | 67.5 | 68.5 | 79.7 |
| SAN Copol. (26% AN) | - | 25.0 | - | - |
| Octa (B.C.L.) | - | - | - | 12.8 |
| TBS-SAN (Ex. 1) | - | - | 24.0 | - |
| Antimony Trioxide | 6.4 | 6.4 | 6.4 | 6.4 |
| Irganox B225 | 0.1 | 0.1 | 0.1 | 0.1 |
| Tinuvin P | 0.2 | 0.2 | 0.2 | 0.2 |
| Tinuvin 770 | 0.2 | 0.2 | 0.2 | 0.2 |
| Mg. Stearate | 0.3 | 0.3 | 0.3 | 0.3 |
| Irgawax 280 | 0.3 | 0.3 | 0.3 | 0.3 |
| % Bromine | 0 | 0 | 10 | 10 |
| Flammability UL 94-V (3/8") | N/R | N/R | V-0 | V-0/NR |
| Notched Izod Impact (J/m) | 441±21 | 455±33 | 348±29 | 458±16 |
| HDT (°C) | - | 78 | 79 | 70 |
| N/R = not rated | | | | |

### Example 3

### High Acrylonitrile Content Terpolymer

Into a 500 ml. three-necked flask fitted with a mechanical stirrer, a reflux condenser and a nitrogen inlet were added:

| | |
|---|---|
| Styrene | = 50 g. |
| TBS | = 30 g. |
| AN | = 220 g. |
| Benzoyl Peroxide | = 2.0 g. |

Nitrogen was bubbled through the stirred mixture for thirty minutes and then the inlet was raised above the liquid level and nitrogen flow was then reduced to a minimum. The flask was then heated to 50°- 60°C and the reaction was continued for a total of about five hours when a viscous solution was obtained. The viscous solution was transferred to a Rotary evaporator where the excess AN was removed under reduced pressure. A yellow-white residue (85.2 g) was obtained in the flask. This residue was dissolved in THF and the polymer was precipitated by dripping the solution into excess stirred methanol. After filtration washing and drying, a white powder (81.1 g) was obtained which analyzed as follows:

| | |
|---|---|
| wt % Nitrogen = 6.69 | i.e. Acrylonitrile = 25.7 % by wt. |
| wt % Bromine = 21.97 | i.e. TBS = 31.2 % by wt. |
| | by subtraction. Styrene = 43.1 % by wt. |

Differential Scanning Colorimetry (DSC) - under nitrogen at a heating rate of 10°C/min revealed a single glass transition at 110°C. The polymer so obtained is identified hereinafter as No.: 7650.

### Example 4

### Polymerization at or close to the Triple Point

Into a 1 l three-necked jacketed resin flask fitted with a mechanical stirrer and a reflux condenser were added 300 ml methylethylketone. The flask was heated with circulating hot water to 70° - 75°C and was purged with a stream of nitrogen for 30 minutes. A solution consisting of tribromostyrene (15 g), styrene (25 g), acrylonitrile (50 g) and azobisisobutyronitrile (0.8 g) was added to the flask and the reaction was continued for 6 hours. A viscous brown mass precipitated from the reaction solution. This mass was dissolved in acetone, precipitated in methanol, filtered, washed in methanol and dried. A yellow powder was obtained. Yield = 53.7 g. The product contained bromine (14.8%) and nitrogen (11.1%). i.e.:

| | Wt % in Feed. | Wt % in Terpolymer |
|---|---|---|
| Tribromostyrene | 16.7 | 21.1 |
| Acrylonitrile | 55.5 | 42.7 |
| Styrene | 27.8 | 36.2 |

Thus at 60% overall conversion the composition of the terpolymer is close to the composition of the feed and is therefore close to the triple point of the monomers.

Glass Transition Temperature by Differential Scanning Colorimeter = 107°C.

### Example 5

### Emulsion Polymerization

Into a 250 ml three-necked flask fitted with a mechanical stirrer, a reflux condenser and a nitrogen purge were added to 80 ml deionized water and 4.2 g of an emulsifier with a hydrophylic lypophylic balance (HLB) of 18. (Atlas Chemical Industries). The bath was warmed to 70°C and the flask was purged with nitrogen for thirty minutes. A warm solution of tribromostyrene (10 g), styrene (4 g), acrylonitrile (6 g) and dodecylmercaptan (200 mg) was slowly added to the stirred water. Azobisizsobutyronitrile (100 mg) was added to the flask to initiate the polymerization and a further 100 mg was added after two hours. The reaction was continued overnight. The emulsion was no longer stable.

On filtering, washing with methanol and drying, 18 g product was obtained. Bromine and nitrogen analyses showed the terpolymer to be 55% TBS, 14.8% acrylonitrile and 29.9% styrene by weight.

Glass Transition Temperature of Terpolymer by (DSC) = 120°C (10°C/min in nitrogen).

### Example 6

### High Bromine Content Terpolymer

Into a 500 ml three-necked flask fitted with a mechanical stirrer and a reflux condenser were added 150 mls. methanol, tribromostyrene (6.25 g), acrylonitrile (12.5 g) and styrene (6.25 g). After flushing with a stream of nitrogen the contents of the flask were heated to reflux. To the hot solution were added dodecylmercaptan (0.5 g) and benzoyl peroxide (0.5 g) and the heating continued. At two hour intervals 3 additional portions of TBS (6.25 g each) were added to the reactor. Four hours after the start an additional portion of styrene (6.25 g) was also added. After a total of 8 hours the reaction was stopped. The contents of the flask were filtered, washed with acetone and dried in a vacuum oven. Yield = 21 g.

The product contained bromine (59.9%) and nitrogen (0.69%); i.e., TBS= 85.6% by weight, acrylonitrile = 2.6 % and (by subtraction), styrene= 11.8%. The polymer so obtained is identified hereinafter as No.: 7692.

Differential Scanning Calorimetry (DSC) - under nitrogen at a heating rate of 10°C/min revealed a single glass transition at 146°C.

On compounding the terpolymer with ABS Novalar (Nova) as in Example 2, a pressed sheet with a Notched Izod Impact of 320 J/m was obtained.

### Example 7

A series of terpolymers were prepared according to Example 1 to cover a wide range of compositions (monomer ratios). Two series of ABS compounds were prepared. The first series used the high rubber Novalar (Nova) according to the procedure described in Example 2 and compound 3 (Table I). The second series used a low rubber ABS, Novadur P2HAT (Bayer). All the compounds contained 10% bromine and equal weights of antimony trioxide and other additives.

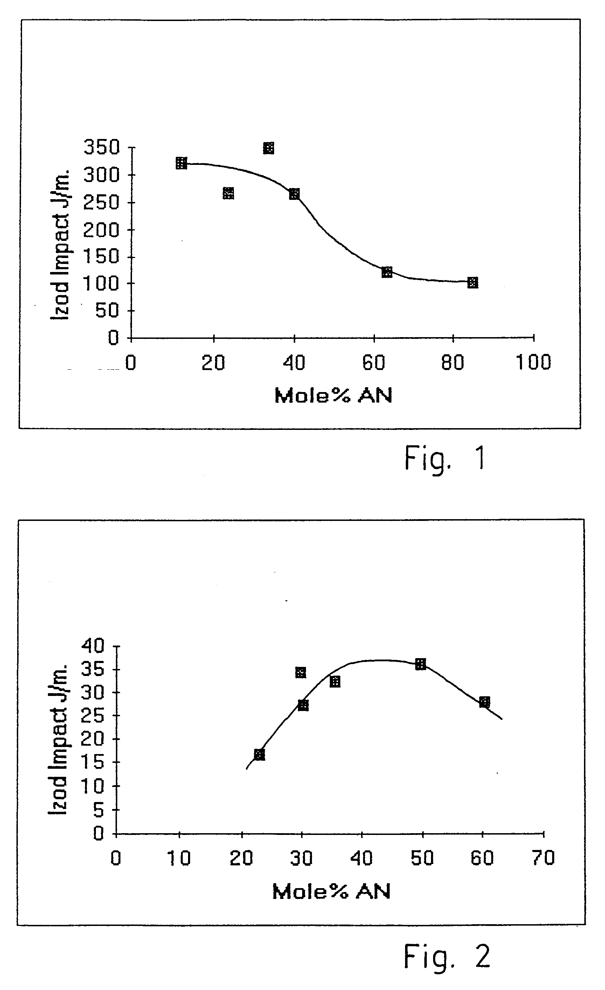

In Tables II and III, the molar compositions of the various terpolymers are shown with the notched Izod Impacts of the ABS compounds. In Figs. 1 and 2, the Izod Impacts are plotted as a function of the molar concentration of the acrylonitrile in the terpolymers for both ABS series. Table II and Fig. 1 relate to Novalar, and Table III and Fig. 2 relate to Novadur. In the Novalar series, the maximum Izod Impacts fall in the range of 15-40 mole % AN. In the Novadur series, the maximum is in the range 30-50.

**Table II**

| **Results Obtained with Novalar** | | | |
|---|---|---|---|
| **Comp. No.** | **Mole% TBS** | **Mole% AN** | **Izod (J/m)** |
| 7663 | 14.9 | 85.1 | 100 |
| 7683 | 5.4 | 63.5 | 120 |
| 7691 | 25.2 | 33.4 | 348 |
| 7692 | 60.8 | 11.9 | 321 |
| 7693 | 36.3 | 40.0 | 266 |
| 7699 | 40.1 | 23.4 | 267 |
| SAN | -- | 49.7 | 455 |

**Table III**

| **Results Obtained with Novadur** | | | |
|---|---|---|---|
| **Comp. No.** | **Mole% TBS** | **Mole% AN** | **Izod (J/m)** |
| 7650 | 9.6 | 49.7 | 36.1 |
| 17007 | 35.8 | 29.9 | 34.4 |
| 17013 | 37.5 | 35.6 | 32.3 |
| 17015 | 21.7 | 30.3 | 27.3 |
| 17017 | 18.1 | 60.4 | 27.8 |
| 17030 | 46.7 | 23.0 | 16.7 |
| SAN | -- | 40.7 | 9.1 |

### Example 8

Terpolymer (7699) - see Table II - was compounded with a medium rubber content ABS, Ronfalin (DSM) according to the composition of compound 3 in Table I and hot-pressed to a 3/8" plate. The plate had a notched Izod Impact = 98 J/m and HDT = 81°C.

## Claims

1. A terpolymer of the formula: 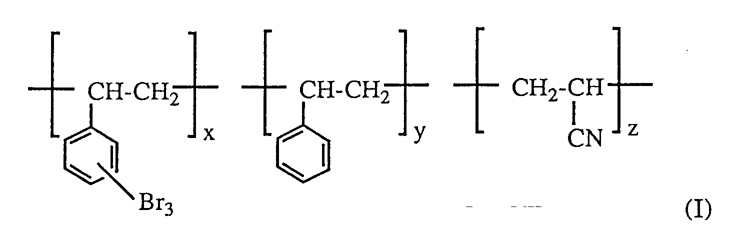 wherein:
x = 0.01 - 0.90
y = 0.05 - 0.50
z = 0.02 - 0.95;
the contents of x, y and z being by mole.

2. A terpolymer according to Claim 1 comprising about 16.7 wt % tribromostyrene moiety, about 55.5 wt % acrylonitrile moiety and about 27.8 wt % styrene moiety.

3. A terpolymer according to claim 1, wherein the content of acrylonitrile is between 15-50% by mole.

4. A process for preparing a terpolymer of formula I, comprising polymerizing a mixture of tribromostyrene, styrene and acrylonitrile, in the desired proportions, in emulsion in the presence of a polymerization initiator.

5. A process according to Claim 4, wherein the polymerization reaction is carried out at a temperature comprised between 30°C and 100°C, preferably about 70°C.

6. A process for preparing a terpolymer of formula I, comprising reacting tribromostyrene with a mixture of styrene and acrylonitrile in the desired proportion, in a lower alkyl alcohol solution and recovering the polymer that precipitates from the reaction mixture.

7. A process according to Claim 6, wherein the lower alkyl alcohol is methanol.

8. A process according to any one of Claims 4 to 7, comprising polymerizing a mixture containing about 55.5 wt % acrylonitrile, about 27.8 wt % styrene, and about 16.7% tribromostyrene.

9. A method of rendering styrenic resins flame-retarded, comprising adding to the said styrenic resin a flame-retardant effective amount of a polymer of formula I, according to any one of Claims 1 to 3.

10. A method according to Claim 9, wherein the styrenic resin is ABS.

11. A flame-retardant additive for rendering flammable resins flame-retarded, comprising a flame-retarding effective amount of a terpolymer of formula I.

12. Styrenic resins, whenever made flame-retardant by the method of Claim 9.
